# EUROPEAN PATENT APPLICATION

(11) **EP 1 020 502 A1**
(43) Date of publication of application: **19.07.2000**
(21) Application number: 99310634.3
(22) Date of filing: 30.12.1999
(51) Int. Cl.: C09G 1/04, C09G 1/16

(54) **The use of polymers as furniture polishes**

(30) Priority: 13.01.1999 US 115648 P
(71) Applicant: ROHM AND HAAS COMPANY, Philadelphia, Pennsylvania 19106-2399 (US)
(72) Inventor: Hsu, Osscar Hsien-Hsiang, Lansdale, Pennsylvania 19446 (US)
(74) Representative: Buckley, Guy Julian

(57) **Abstract**

An all aqueous furniture polish and a method of protecting furniture is disclosed. The method utilizes an aqueous emulsion polymer containing a hydrophobic monomer to provide water, oil, food, and dirt resistant coatings on furniture.

## Description

This invention relates to the use of polymers as furniture polishes. The polymers contain hydrophobic monomers as polymerized units and are prepared by emulsion polymerization.

It is common to use funiture polish to protect furniture from water, food, oil, and dirt. A good furniture polish should be resistant to water and oil, and should provide a clear, shiny finish on the furniture. By furniture is meant tables, chairs, sofas, desks, dressers, beds and the like. The furniture that is protected by furniture polish is typically made from wood. Some furniture contains both wood and glass surfaces. It is desirable to have a furniture polish which can be used to clean, protect, and provide a clear, shiny finish on glass surfaces as well as wood surfaces.

The furniture polishes that are commercially available typically are made with wax. Generally, furniture polishes are sold as two phase systems. In one phase, organic solvents are used to solubilize the wax. A separate aqueous phase contains surfactants and other materials. Typically, furniture polish is sold in a metal can with a spray nozzle. The can must be shaken prior to spraying the polish in order to make an emulsion from the aqueous and organic phases.

An all aqueous furniture polish would be preferred over this two phase system containing organic solvent. By "all aqueous furniture polish" is meant a furniture polish which does not contain volatile organic compounds. One benefit of an all aqueous furniture polish would be to eliminate the need for shaking the furniture polish prior to spraying. An all aqueous funiture polish is also desirable due to environmental concerns over volatile organic compounds ("VOC").

United States Patent Number 5,085,695 discloses a protective furniture polish composition. The composition contains water; a polymer made from a fatty monomer, an acidic monomer, and a hard monomer; an oil; and an additive which may be a co-solvent for the polymer or a surface active agent. The fatty monomers include those with 12 or more carbon atoms in the alkyl group of the alcohol portion of the ester group.

The polymers exemplified in the Patent were made in ethyl acetate and then emulsified. Due to the process used to prepare the polymer, residual ethyl acetate (a VOC) will be found in furniture polishes made with the polymer. The co-solvent which may be added to the furniture polish is also a VOC. Therefore, despite this disclosure, there is still a need for an all aqueous furniture polish which can be used to clean, protect, and provide a clear, shiny finish on glass surfaces as well as wood surfaces.

I have found that this need can be met by replacing the wax in a furniture polish with an aqueous emulsion polymer, which contains as polymerized units a hydrophobically modified monomer. By hydrophobic monomer is meant a C12 to C₄₀ alkyl ester of (meth)acrylic acid.

The present invention provides a method of protecting furniture including: applying an aqueous emulsion polymer to the furniture wherein the polymer contains as polymerized units: a) from 1 to 100 parts by weight of at least one C12 to C₄₀ alkyl ester of (meth)acrylic acid, b) from 0 to 99 parts by weight of at least one ethylenically unsaturated monomer, and c) from 0 to 15 parts by weight of at least one ethylenically unsaturated acid containing monomer or salts thereof.

The present invention also provides an article including furniture coated with the polymer described above.

In an additional aspect of the invention, an all aqueous furniture polish including: a) from 1 to 100 parts by weight of at least one C12 to C₄₀ alkyl ester of (meth)acrylic acid, b) from 0 to 99 parts by weight of at least one ethylenically unsaturated monomer, and c) from 0 to 15 parts by weight of at least one ethylenically unsaturated acid containing monomer or salts thereof is provided.

The polymer used in this invention may be prepared by a single stage or multi-stage process. The process for making the polymer is emulsion polymerization utilizing methyl-β-cyclodextrin ("CD"). See U.S. Pat. No. 5,521,266 for a detailed description of the emulsion polymerization process. No organic solvent is used in the process of preparing the polymers useful in this invention.

The morphology of the polymer utilized in this invention may be designed to optimize certain properties of the polymer. For example, the polymer may be made in a core-shell morphology wherein the core polymer is designed to have a lower glass transition temperature than the polymer that creates the shell. Alternatively, the polymer that makes up the core may be designed to have a higher glass transition temperature than the polymer that makes up the shell. In this case, the core may act as a filler and the shell may bind the harder cores together to aid in film formation. The core-shell polymers may be prepared by methods well known in the art.

In the process utilized for preparing the samples within this application, a first stage was prepared by adding a monomer emulsion and sodium persulfate to a solution containing CD, deionized water, and surfactant. The first stage was reacted at 85°C. A second stage was prepared by making a second monomer emulsion and feeding the second monomer emulsion and a sodium persulfate solution to the reacted first stage. The second stage was reacted at 85°C.

The polymer used in this invention is a composition which contains as polymerized units from 1 to 100 parts by weight, preferably from 20 to 95 parts by weight, more preferably 40 to 95 parts by weight of at least one C₁₂ to C₄₀ alkyl ester of (meth)acrylic acid. It is further preferred that the polymer used in this invention contains as polymerized units from 60 to 95 parts by weight, preferably 70 to 94 parts by weight, more preferably 80 to 93 parts by weight of at least one C12 to C₄₀ alkyl ester of (meth)acrylic acid. It is preferred that the alkyl ester of (meth)acrylic acid be a C₁₂ to C₃₀ alkyl ester of (meth)acrylic acid. It is more preferred that the alkyl ester of (meth)acrylic acid be a C₁₂ to C₁₈ alkyl ester of (meth)acrylic acid. Suitable alkyl esters of (meth)acrylic acid include, but are not limited to lauryl (meth)acrylate, cetyl (meth)acrylate, stearyl (meth)acrylate, behenyl (meth)acrylate, and eicosyl (meth)acrylate. Beneficial properties may be obtained by utilizing more than one C12 to C₄₀ alkyl ester of (meth)acrylic acid.

The polymer used in this invention may also contain as polymerized units from 0 to 99 parts by weight, preferably 4 to 79 parts by weight, more preferably 4 to 59 parts by weight of at least one ethylenically unsaturated monomer. It is further preferred that the polymer used in this invention contains as polymerized units from 4 to 39 parts by weight, preferably 5 to 29 parts by weight, more preferably 6 to 19 parts by weight of at least one ethylenically unsaturated monomer. Suitable ethylenically unsaturated monomers for use in the preparation of the polymer compositions of this invention include, but are not limited to (meth)acrylic ester monomers including methyl acrylate, ethyl acrylate, butyl acrylate, 2-ethylhexyl acrylate, decyl acrylate, methyl methacrylate, butyl methacrylate, hydroxyethyl methacrylate, and hydroxypropyl acrylate; acrylamide or substituted acrylamides; styrene or substituted styrene; vinyl acetate or other vinyl esters; vinyl monomers such as vinyl chloride, vinylidene chloride, N-vinyl pyrolidone; and acrylonitrile or methacrylonitrile. Butyl acrylate, methyl methacrylate, and styrene are preferred.

The polymer used in this invention may also contain as polymerized units from 0 to 15 parts by weight, preferably 1 to 10 parts by weight, more preferably 1 to 5 parts by weight ethylenically unsaturated acid containing monomer or salts thereof. Suitable ethylenically unsaturated acid containing monomers include, but are not limited to acrylic acid, methacrylic acid, crotonic acid, phosphoethyl methacrylate, 2-acrylamido-2-methyl-1-propanesulfonic acid, sodium vinyl sulfonate, itaconic acid, fumaric acid, maleic acid, monomethyl itaconate, monomethyl fumarate, monobutyl fumarate, and maleic anhydride. Acrylic acid and methacrylic acid are preferred. Methacrylic acid is more preferred.

The polymer used in this invention may also contain as polymerized units from 0 to 25 parts by weight, preferably 0 to 15 parts by weight, more preferably 0 to 10 parts by weight of a fluorinated (meth)acrylate ethylenically unsaturated monomer, such as Zonyl™ products (Trademark of DuPont Chemical Company).

The polymer used in this invention may also contain as polymerized units from 0 to 25 parts by weight, preferably 0 to 15 parts by weight, more preferably 0 to 10 parts by weight of a silicone containing ethylenically unsaturated monomer, such as vinyl trimethoxy silane and methacryloxy propyl trimethoxy silane.

The polymer used in this invention may also contain as polymerized units from 0 to 80 parts by weight, preferably 0 to 50 parts by weight, more preferably 1 to 15 parts by weight of a monomer selected from C6-C20 alkyl styrene and alkyl-alpha-methyl styrene, C6-C20 alkyl dialkyl itaconate, C₁₀-C₂₀ vinyl esters of carboxylic acids, C₈-C₂₀ N-alkyl acrylamide and methacrylamide, C₁₀-C₂₀ alkyl alpha-hydroxymethylacrylate, C₈-C₂₀ dialkyl 2,2'-(oxydimethylene) diacrylate, C₈-C₂₀ dialkyl 2,2'-(alkyliminodimethylene)diacrylate, C₈-C₂₀ N-alkylacrylimide, and C₁₀-C₂₀ alkyl vinylether.

The polymer used in this invention may also contain as polymerized units from 0.1 to 10 parts by weight, preferably 0.1 to 5 parts by weight, more preferably 0.1 to 3 parts by weight, based on the polymer weight of a cross-linker selected from a cross-linking agent and a cross-linking monomer. By cross-linker is meant a compound which has at least 2 reactive groups which will react with acid groups found on the monomers of the compositions of this invention. Cross-linking agents useful in this invention include a polyaziridine, polyisocyanate, polycarbodiimide, polyamine, and a polyvalent metal. The cross-linking agent is optional, and may be added after polymerization has been completed.

Cross-linking monomers are cross-linkers which are incorporated with the monomers of the compositions of this invention during polymerization. Cross-linking monomers useful in this invention include acetoacetate-functional monomers such as acetoacetoxyethyl acrylate, acetoacetoxypropyl methacrylate, acetoacetoxyethyl methacrylate, allyl acetoacetate, acetoacetoxybutyl methacrylate, and 2,3-di(acetoacetoxy)propyl methacrylate; divinyl benzene, (meth)acryloyl polyesters of polyhydroxylated compounds, divinyl esters of polycarboxylic acids, diallyl esters of polycarboxylic acids, diallyl dimethyl ammonium chloride, triallyl terephthalate, methylene bis acrylamide, diallyl maleate, diallyl fumarate, hexamethylene bis maleamide, triallyl phosphate, trivinyl trimellitate, divinyl adipate, glyceryl trimethacrylate, diallyl succinate, divinyl ether, the divinyl ethers of ethylene glycol or diethylene glycol diacrylate, polyethylene glycol diacrylates or methacrylates, 1,6-hexanediol diacrylate, pentaerythritol triacrylate or tetraacrylate, neopentyl glycol diacrylate, allyl methacrylate, cyclopentadiene diacrylate, the butylene glycol diacrylates or dimethacrylates, trimethylolpropane di- or tri-acrylates, (meth)acrylamide, n-methylol (meth)acrylamide, mixtures thereof, and the like. (Meth)acrylamide, n-methylol (meth)acrylamide, and mixtures thereof are preferred. The amount of cross-linker utilized is chosen such that the cross-linker does not interfere with film formation.

Chain transfer agents may be used to control the molecular weight of the polymer used in this invention. Suitable chain transfer agents include mercaptans, such as, for example, dodecylmercaptan ("n-DDM"). The chain transfer agent may be used at from 0.1% to 10% based on the total weight of the polymeric composition.

The polymer used in this invention may be used by itself as a furniture polish, or may be formulated with other materials to enhance the protection of the furniture. Suitable materials include, but are not limited to oils and fragrances. Oils such as lemon oil, orange oil, old english oil and the like may generally be added at from 0.1% to 3% by weight , based on the total weight of the polish. Lemon or orange fragrances and the like may aslo be added to the formulation.

The polymer used in this invention is typically used to coat furniture by applying the polymer to the furniture. The furniture may be selected from tables, chairs, sofas, desks, dressers, beds, and the like. The polymer may be applied to the furniture by spray applying. Other coating methods known in the art may also be utilized. The polymer may be applied at from 1g/m² to 40g/m², preferably 10g/m² to 20g/m² to yield a dry thickness of from 1 micron to 20 microns, preferably 5 microns to 10 microns. A dry cloth may be utilized to spread the polymer over the furniture and to absorb any excess polymer. The polymer is then dried. The polymer may be dried under ambient conditions.

The polymer may also be admixed with latexes prior to applying the polymer to the furniture. Any latex may be used. Suitable latexes include, but are not limited to butyl acrylate/methyl methacrylate, butyl acrylate/styrene, styrene/butadiene, and vinyl acetate latexes. The amount of polymer admixed with the latex is typically from 1 to 50 parts by weight, preferably 5 to 45 parts by weight, more preferably 10 to 40 parts by weight. The admixture is typically applied to furniture as described above.

The following abbreviations are used throughout this patent application:
- BA =: stearyl methacrylate
- SMA =: butyl acrylate
- CD =: methyl-β-cyclodextrin
- MMA =: methyl methacrylate
- MAA =: methacrylic acid

The following Examples are intended to demonstrate the polymers that are useful in this invention and the benefits obtained when using the polymers as coatings on furniture. The Examples should not be construed as limiting the scope of the invention.

The general procedure for preparing the polymers used in this invention was as follows: for stage 1, 400 g deionized water, Triton® XN-45S (Trademark of Union Carbide Chemical Company) anionic surfactant, and 28.6 g CD were introduced into a 4-liter round bottom flask with four necks equipped with a mechanical stirrer, temperature control device, condenser, monomer and initiator feed lines, and a nitrogen inlet at room temperature. The contents were heated to 85°C while stirred under a nitrogen purge. A monomer emulsion was prepared separately. Solutions of 0.35% by weight sodium carbonate (based on the total monomer weight in stage 1 and stage 2) in 25 g deionized water and 0.35% by weight sodium persulfate (based on the total monomer weight in stage 1 and stage 2) in 30 g deionized water were introduced into the reaction kettle. The monomer emulsion was fed over a period of 20 minutes together with an initiator solution of 0.05% sodium persulfate (based on the total monomer weight in stage 1 and stage 2) in 210 g deionized water.

For stage 2, a second monomer emulsion was prepared using 625 g deionized water, 7.8 g Triton® XN-45S anionic surfactant, and monomers. Immediately after the end of the stage 1 monomer emulsion feed, the stage 2 monomer emulsion was fed over a period of 3 hours together with the sodium persulfate initiator solution. The monomers of the first and second monomer emulsions were selected such that the polymers of Table 1 (based on weight percent monomer) were obtained. The list of different polymers includes polymers with and without n-DDM. The use of n-DDM lowers the molecular weight of the polymer (from about 500,000 to about 150,000).

**Table 1**

| Polymer | SMA | BA | MMA | MAA | Zonyl |
|---|---|---|---|---|---|
| 1 | 93 | 0 | 5 | 2 | 0 |
| 2 | 40 | 20 | 39 | 1 | 0 |
| 3* | 0 | 0 | 49 | 1 | 50 |

| | | | | | |
|---|---|---|---|---|---|
| * = 2% CD | | | | | |

### Water Resistance

The polymer sample for water resistance measurement was prepared by measuring 100 g of polymer 1 into a 3,000 ml beaker and gradually introducing 2,275 grams of water under gentle agitation for 5 minutes. The sample was then poured into a plastic spraying bottle.

About 0.4 g of the test sample was sprayed onto a piece of 8 cm x 10 cm Kodak projector slide cover glass and on wood furniture. The samples were allowed to air-dry for 20 minutes. Two minutes contact angles were then measured by a Goniometer. A separate experiment was performed where a slide cover glass and wood furniture were treated as above, then polished using a cheese cloth with a circular motion until the polymer was totally and uniformly distributed all over the glass and the wood. Two minute contact angles were then measured. The higher the number indicates higher hydrophobicity. The results are shown in Table 2.

**Table 2**

| Contact Angle (°) | | | | |
|---|---|---|---|---|
| | Air-Dried | | Polished | |
| Polymer | Glass | Wood | Glass | Wood |
| None | 13 | 46 | 13 | 45 |
| 1 | 96 | 109 | 80 | 87 |

### Results

The polymer sample demonstrated good water resistance on both glass and wood, whether air-dried or polished.

### Gloss

All polymer samples were diluted as above with water to a solids content of 2% by weight. Six drops (About 0.3 g) of the samples were applied on a piece of 7.5 cm x 38 cm nitrocellulose finished cherry wood surface and then distributed evenly over the surface with a cheese cloth. The surface was then polished using another piece of dry cheese cloth with a circular motion until a glossy appearance was obtained. A BYK Gardner Micro-TRI-gloss meter was used for the measurement of gloss at 20° and 60° projection angles. The higher the number, the glossier the surface. The results of the gloss measurements are shown in Table 3.

**Table 3**

| | Gloss | |
|---|---|---|
| Sample | 20° | 60° |
| No Polymer | 4.3 | 18.5 |
| 1 | 6.9 | 26.3 |
| 2 | 6.7 | 26.5 |
| 3 | 14.2 | 40.4 |

### Results

The polymer treated surfaces had increased gloss with respect to the untreated surface. The sample containing a fluorocarbon had a significantly higher gloss than those without a fluorocarbon.

### Film Clarity

The clarity of films made from the polymers used in this invention was tested. One hundred grams of polymer 1 was placed in a 3,000 ml beaker and gradually 2,275 grams of water were added. The sample was gently agitated for 5 minutes. The sample was then poured into a plastic spraying bottle. The procedure was repeated for polymers 2 and 3.

About 0.15 g of the test samples was sprayed onto pieces of 8 cm x 10 cm Kodak projector slide cover glass. The samples were allowed to air-dry for 20 minutes then observed for film formation and clarity. The results are shown in Table 4.

**Table 4**

| Polymer | Film Former | Film Clarity |
|---|---|---|
| 1 | Yes | Clear |
| 2 | Yes | Clear |
| 3 | Yes | Clear |

### Results

The polymer samples formed good clear films. Clear film formation can contribute not only clarity, but also to gloss and cleaning.

### Water Blushing

Water blushing may occur after a drop of water is applied to a surface coated with a polymer. Water blushing is seen as the coating turning white, and is therefore undesirable. Samples were prepared the same method as described above. About 0.15 g of the 2% solids polymer sample was sprayed onto a piece of 8 cm x 10 cm Kodak projector slide cover glass and allowed to air-dry for 20 minutes. Five drops of water (about 0.15 grams) were dropped onto the glass and then the whiteness of the droplet was measured within 5 minutes. The results are shown in Table 5.

**Table 5**

| Polymer | Film Former | Water Blushing |
|---|---|---|
| 1 | Yes | No |
| 2 | Yes | No |

### Results

Water blushing is an indication of film formation and polymer formulation characteristics. The film forming nature and the polymer formulation characteristics of polymers 1 and 2 gave no water blushing. The fact that the polymer samples did not show water blushing indicates that they should have good reistance to chemicals and water.

### Food Stain Resistance

All polymer samples were diluted with water to 2% solid contents. Cherry wood surfaces were treated with the polymer samples. About 0.1 gram of food condiments such as catsup and mustard, and 0.05 gram of beverages such as coffee and tea were then applied on the treated cherry wood surfaces and covered with petri-dishes for 4 hours. The substances were removed with damp paper towels and the resistance was graded on a scale of 0 - 5, where 5 is excellent ( no marks at all left on the surface). The results are shown in Table 6.

**Table 6**

| Polymer | Catsup | Mustard | Coffee | Tea |
|---|---|---|---|---|
| 1 | 4 | 5 | 2 | 3 |
| 2 | 5 | 5 | 5 | 4 |
| 3 | 5 | 5 | 5 | 5 |

### Results

The results above demonstrate that the use of aqueous emulsion polymers containing hydrophobic monomers as polymerized units as furniture polishes provides good protection against common foods known to stain furniture.

## Claims

1. A method of protecting furniture comprising:
applying an aqueous emulsion polymer to the furniture wherein the polymer comprises as polymerized units: a) from 1 to 100 parts by weight of at least one C₁₂ to C₄₀ alkyl ester of (meth)acrylic acid, b) from 0 to 99 parts by weight of at least one ethylenically unsaturated monomer, and c) from 0 to 15 parts by weight of at least one ethylenically unsaturated acid containing monomer or salts thereof.

2. The method according to Claim 1 wherein the polymer comprises as polymerized units: a) from 20 to 95 parts by weight of at least one C₁₂ to C₄₀ alkyl ester of (meth)acrylic acid, b) from 4 to 79 parts by weight of at least one ethylenically unsaturated monomer, and c) from 1 to 10 parts by weight of at least one ethylenically unsaturated acid containing monomer or salts thereof.

3. The method according to Claim 1 wherein the polymer comprises as polymerized units: a) from 40 to 95 parts by weight of at least one C₁₂ to C₄₀ alkyl ester of (meth)acrylic acid, b) from 4 to 59 parts by weight of at least one ethylenically unsaturated monomer, and c) from 1 to 5 parts by weight of at least one ethylenically unsaturated acid containing monomer or salts thereof.

4. An article comprising:
furniture coated with a polymer; wherein the polymer comprises as polymerized units: a) from 1 to 100 parts by weight of at least one C₁₂ to C₄₀ alkyl ester of (meth)acrylic acid, b) from 0 to 99 parts by weight of at least one ethylenically unsaturated monomer, and c) from 0 to 15 parts by weight of at least one ethylenically unsaturated acid containing monomer or salts thereof.

5. The article according to Claim 4 wherein the polymer comprises as polymerized units: a) from 20 to 95 parts by weight of at least one C₁₂ to C₄₀ alkyl ester of (meth)acrylic acid, b) from 4 to 79 parts by weight of at least one ethylenically unsaturated monomer, and c) from 1 to 10 parts by weight of at least one ethylenically unsaturated acid containing monomer or salts thereof.

6. The article according to Claim 4 wherein the polymer comprises as polymerized units: a) from 40 to 95 parts by weight of at least one C₁₂ to C₄₀ alkyl ester of (meth)acrylic acid, b) from 4 to 59 parts by weight of at least one ethylenically unsaturated monomer, and c) from 1 to 5 parts by weight of at least one ethylenically unsaturated acid containing monomer or salts thereof.

7. An all aqueous furniture polish comprising:
a) from 1 to 100 parts by weight of at least one C₁₂ to C₄₀ alkyl ester of (meth)acrylic acid, b) from 0 to 99 parts by weight of at least one ethylenically unsaturated monomer, and c) from 0 to 15 parts by weight of at least one ethylenically unsaturated acid containing monomer or salts thereof.

8. The furniture polish according to Claim 7 wherein the polymer comprises as polymerized units: a) from 20 to 95 parts by weight of at least one C₁₂ to C₄₀ alkyl ester of (meth)acrylic acid, b) from 4 to 79 parts by weight of at least one ethylenically unsaturated monomer, and c) from 1 to 10 parts by weight of at least one ethylenically unsaturated acid containing monomer or salts thereof.

9. The furniture polish according to Claim 7 wherein the polymer comprises as polymerized units: a) from 40 to 95 parts by weight of at least one C₁₂ to C₄₀ alkyl ester of (meth)acrylic acid, b) from 4 to 59 parts by weight of at least one ethylenically unsaturated monomer, and c) from 1 to 5 parts by weight of at least one ethylenically unsaturated acid containing monomer or salts thereof.
